# FASCICULE DE BREVET EUROPEEN

(11) **EP 0 859 702 B1**
(45) Date de publication et mention de la délivrance du brevet: **21.03.2001**
(21) Numéro de dépôt: 96938119.3
(22) Date de dépôt: 06.11.1996
(51) Int. Cl.: B60C 9/08, B29D 30/42

(54) **PNEU RADIAL AVEC NAPPE CARCASSE A SOUDURE PAR RECOUVREMENT OBLIQUE**
RADIALER REIFEN MIT EINER KARKASSE,DEREN ENDE SICH SCHRÄG ÜBERLAPPEN
RADIAL TYRE WITH AN OBLIQUELY LAP-WELDED CARCASS PLY

(30) Priorité: 10.11.1995 FR 9513445
(43) Date de publication de la demande: 26.08.1998
(73) Titulaire: MICHELIN RECHERCHE ET TECHNIQUE S.A., CH-1763 Granges-Paccot (CH)
(72) Inventeur: CHAMPILOU, Yves, Ohta-shi 373 (JP); PANIGHEL, Bruno, F-63510 Aulnat (FR)
(74) Mandataire: Bauvir, Jacques
(86) Numéro de dépôt international: EP9604855
(87) Numéro de publication internationale: WO9717216

(56) Documents cités:
- FR-A- 1 269 753
- FR-A- 2 454 916
- GB-A- 191 112 879
- GB-A- 191 225 172
- US-A- 2 688 996

## Description

La présente invention se rapporte aux pneumatiques radiaux et aux armatures destinées à renforcer la carcasse de tels pneumatiques.

Il est connu que de telles armatures de carcasse sont constituées d'au moins une nappe, ci-après dénommée "nappe radiale" ou "nappe carcasse radiale", préparée sous la forme d'un produit semi-fini et qui consiste essentiellement en une matrice élastomérique renforcée par des fils. Ces fils de renforcement, désignés ci-après "fils radiaux", sont disposés à intervalle régulier, et parallèlement les uns aux autres, dans une direction sensiblement radiale (sensiblement normale à la direction circonférentielle), c'est-à-dire par convention une direction faisant un angle d'environ 90 ± 10° avec la tangente à la direction circonférentielle du pneumatique.

Chaque nappe radiale se présente normalement sous la forme d'un élément annulaire continu qui est formé, lors de la confection de l'armature de carcasse sur un tambour, par découpe de lés ou bandes de tissus, puis par assemblage des deux bords de la découpe sur le tambour au moyen d'un joint, encore appelé "soudure", permettant de relier ces deux bords. Selon les règles de l'art antérieur, ces lés de tissu sont toujours découpés entre deux fils radiaux, et parallèlement à ces derniers pour éviter de les couper. La soudure ainsi obtenue a donc une orientation que l'on peut qualifier de radiale, comme celle des fils de renforcement.

Deux types de joint ou soudure sont couramment employés : la soudure dite "bout à bout", obtenue par aboutage des deux bouts (c'est-à-dire sans superposition des deux bords), et la soudure dite "par recouvrement" (c'est-à-dire par superposition, chevauchement des deux bords). Dans le cas des enveloppes de pneumatique radial pour véhicule de tourisme ou camionnette dont la carcasse est renforcée par des fils non métalliques, notamment par des fils textiles, on utilise habituellement une soudure par recouvrement.

La présente invention concerne précisément une amélioration apportée aux soudures par recouvrement des nappes radiales constituant les armatures de carcasse des pneumatiques radiaux.

Comme son nom l'indique, la technique de soudure par recouvrement consiste à recouvrir un bord de la nappe par l'autre bord, suivant une certaine distance, et à assurer la liaison par application d'une pression. Après cuisson de l'enveloppe, ce type de soudure présente une grande solidité, due à la surface d'adhésion importante qui peut s'exercer entre les parties de recouvrement.

Cependant, cette soudure par recouvrement présente des inconvénients. En raison d'une double épaisseur de tissu, la densité de fils radiaux est en effet multipliée par deux dans la zone de recouvrement. Par "densité de fils", on entend ici de manière connue le nombre de fils par unité de longueur de nappe, dans une direction normale à l'axe de ces fils. La présence de ces fils "en double" (double couche de fils) a notamment pour conséquence que, sous l'effet de la pression de gonflage du pneumatique, et donc de la mise sous tension de la nappe carcasse radiale, chaque fil radial présent dans la soudure va subir une tension et un allongement environ deux fois moindre, comparativement à un fil radial situé en dehors de la soudure. En outre, et de manière connue, les fils radiaux, s'ils sont thermorétractiles, présenteront lors de la cuisson du pneumatique une contraction différente selon qu'ils seront à l'intérieur ou à l'extérieur de la soudure.

Il résulte des phénomènes ci-dessus une discontinuité des propriétés de la nappe carcasse au niveau de la soudure, notamment de rigidité, et par suite un manque d'uniformité du pneumatique fabriqué. Cette discontinuité et ce manque d'uniformité, très localisés, peuvent être particulièrement nuisibles à l'apparence, à l'aspect extérieur du pneumatique puisqu'ils vont se traduire dans le cas général par la formation d'un creux, plus ou moins prononcé, dans les flancs du pneumatique gonflé. On sait que cette dépression ou déformation du flanc, encore décrite sous le terme d'indentation, est généralement d'autant plus marquée que le module en extension du fil de renforcement est plus faible.

Le défaut d'aspect ci-dessus, bien connu et particulièrement visible lorsqu'on utilise par exemple des fils en polyester, est parfois préjudiciable à la bonne commercialisation du pneumatique : si ce défaut est jugé trop prononcé, il empêchera même toute commercialisation du pneu fabriqué, avec pour conséquence une destruction de ce dernier, destruction d'autant plus regrettable, du point de vue fonctionnel, que n'est associé à ce défaut d'aspect aucune diminution de la sécurité. En outre, il est connu que cette non-uniformité des flancs peut nuire à la régularité du roulage du pneumatique.

De très nombreuses solutions ont été proposées jusqu'ici pour tenter de pallier les inconvénients précédents. Pour la très grande majorité d'entre elles, ces solutions consistent à modifier les caractéristiques des fils de renforcement radiaux ou leur agencement dans la partie de recouvrement considérée.

On a proposé par exemple d'utiliser des fils radiaux possédant des caractéristiques différentes, par exemple des fils formés de matériaux à plus faible module, des fils plus fortement tordus, ou possédant une contraction thermique plus faible, une résistance, un diamètre et/ou un titre plus faibles (voir par exemple la demande de brevet FR-A-2 624 441, les brevets EP-B-0 205 824, JP1988/48723) ; d'autres solutions qui ont été proposées consistent à augmenter l'espacement entre les fils, à enlever les fils "en double" après l'opération de soudure, ou encore à les supprimer préalablement à l'opération de soudure (voir par exemple les demandes de brevet publiées sous les Nos JP1991/189131, JP1993/154938, JP1993/238203, JP1993/246207). On a encore proposé de réduire l'épaisseur de la soudure par des techniques d'écrasement et d'uniformisation de la zone de recouvrement (voir par exemple EP-A-0 406 821 ou US-A-5 021 115, EP-A-0 498 215, US-A-5 240 534), ou encore d'ajouter une autre bande de tissu ou de gomme au-dessus de la soudure (voir par exemple EP-A-0 407 134 ou US-A-5 437 751).

Toutes les solutions exposées précédemment présentent l'inconvénient majeur de nécessiter, soit la préparation de tissus calandrés hybrides, c'est-à-dire non homogènes (utilisation, par exemple, de fils radiaux de natures et/ou de propriétés différentes, de densités de fils différentes), en amont des opérations de confection du pneumatique elles-mêmes, soit des étapes supplémentaires pendant cette confection.

D'autres solutions ont été proposées, moins nombreuses, qui consistent à couper sélectivement certains des fils radiaux "en double", dans l'un ou l'autre bord de recouvrement de la soudure. Ainsi, seuls les fils d'un des deux bords "participent" à la mise sous tension de la nappe carcasse. A titre d'exemple, le brevet US-A-4 466 473 décrit un procédé de fabrication d'armature de carcasse radiale qui consiste à pratiquer, dans l'un des bords du tissu, des incisions perpendiculaires à la direction des fils radiaux, ce bord étant ensuite recouvert par l'autre bord pour former la soudure par recouvrement. De telles méthodes d'incision des tissus, pour une découpe sélective des fils radiaux d'un des deux bords, sont particulièrement délicates à mettre en oeuvre : d'une part la découpe doit être suffisamment profonde pour que tous les fils "en double" soient coupés, mais il est impératif d'autre part, pour des raisons de sécurité, qu'aucun des fils extérieurs à la soudure ne soit coupé. De telles conditions nécessitent des interventions ou des reprises manuelles fréquentes de la part d'un opérateur, sur le tambour de confection, et ces méthodes s'avèrent finalement incompatibles avec l'utilisation de machines de confection automatiques, fonctionnant à cadence élevée, et ne pouvant garantir la précision indispensable à la réalisation de telles incisions et soudures.

En définitive, les nombreuses solutions proposées jusqu'ici s'avèrent coûteuses ou difficiles à mettre en oeuvre industriellement, et aucune d'entre elles ne s'est révélée complètement satisfaisante, notamment du point de vue de la productivité, pour supprimer ou même atténuer le problème de déformation des flancs des pneumatiques radiaux, renforcés notamment par des fils en polyester ayant un bas module en extension.

Ainsi, il existe toujours une demande, d'ailleurs croissante, pour améliorer l'aspect des flancs des pneumatiques radiaux.

Un but de la présente invention est de proposer un pneumatique amélioré en ce qui concerne l'apparence de ses flancs, ceci sans préjudice pour ses autres performances.

Un autre but de l'invention est d'offrir un tel pneumatique sans difficultés ni surcoût de fabrication, un tel pneumatique pouvant notamment être confectionné sur des machines automatiques fonctionnant à cadence élevée, sans nécessiter d'interventions manuelles, et donc sans diminuer la productivité.

Le pneumatique radial de l'invention ayant au moins un flanc et une armature de carcasse constituée d'au moins une nappe radiale qui comporte au moins une soudure par recouvrement formée par la superposition de deux extrémités ou de deux éléments adjacents de ladite nappe, est caractérisé en ce que, dans ledit flanc au moins, l'orientation générale (notée *D2* ci-après) de la soudure par recouvrement est oblique par rapport à la direction (notée *D1* ci-après) des fils radiaux, i.e. ni parallèle ni perpendiculaire à cette direction *D1.*

En d'autres termes, l'armature de carcasse du pneumatique de l'invention est formée par au moins un élément de tissu annulaire (nappe radiale) soudé par recouvrement ou chevauchement d'extrémités ou portions adjacentes dudit tissu, la soudure par recouvrement ainsi obtenue adoptant, dans au moins un flanc du pneumatique, une orientation générale inclinée par rapport à celle des fils radiaux, et non parallèle à ces derniers comme c'est le cas pour les pneumatiques radiaux de l'art antérieur. Cette soudure par recouvrement peut être qualifiée de soudure "oblique", par opposition aux soudures conventionnelles de l'art antérieur, dites "radiales", dont l'orientation est parallèle à la direction *D1* des fils radiaux.

De manière surprenante, on a constaté que la trace de la soudure, dans le flanc du pneumatique, était nettement moins visible dans cette disposition que dans la disposition classique. En outre, on obtient en général une amélioration de l'uniformité, pour les raisons exposées ci-après.

L'objet de l'invention est en particulier un pneumatique dont l'armature de carcasse comporte une seule nappe radiale.

L'invention sera aisément comprise à l'aide de la description et des exemples qui suivent, ainsi que des figures toutes schématiques relatives à ces exemples.

Sur le dessin :
- la figure 1 représente une coupe radiale d'une enveloppe de pneumatique à armature de carcasse radiale;
- la figure 2 représente, vue de dessus et projetée à plat, pour une enveloppe de pneumatique conforme à l'invention, une portion de nappe carcasse radiale avec une soudure par recouvrement oblique (Fig. 2b), ainsi que les deux extrémités (Fig. 2a) d'un même lé de tissu, coupées en biais par rapport aux fils radiaux, et destinées à être superposées pour obtenir cette soudure par recouvrement oblique;
- la figure 3 représente, vue de dessus et projetée à plat, pour une enveloppe de pneumatique selon l'art antérieur, une portion de nappe carcasse radiale avec une soudure radiale (Fig. 3b), ainsi que les deux extrémités (Fig. 3a) d'un même lé de tissu, coupées parallèlement aux fils radiaux, et destinées à être superposées pour obtenir cette soudure radiale;
- la figure 4 représente une autre variante d'enveloppe de pneumatique conforme à l'invention, avec une portion de nappe carcasse radiale ayant une soudure par recouvrement oblique en forme de "V";
- la figure 5 est une vue en coupe longitudinale d'une portion d'armature de carcasse radiale pour une enveloppe de pneumatique radial selon l'art antérieur;
- la figure 6 est une vue en coupe longitudinale d'une portion d'armature de carcasse radiale pour une enveloppe de pneumatique radial conforme à l'invention.

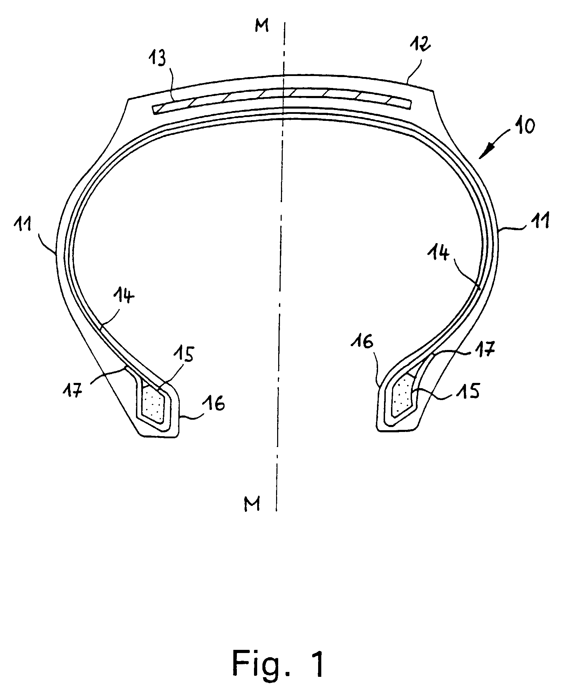

La figure 1 représente, de manière schématique et très générale, une coupe radiale d'une enveloppe de pneumatique à armature de carcasse radiale pour véhicule de tourisme ou pour camionnette, cette enveloppe pouvant être conforme ou non conforme à l'invention, dans cette représentation générale. Cette enveloppe 10 comporte deux flancs 11 réunis par une bande de roulement 12, une armature de sommet 13, et une armature de carcasse 14 ancrée à deux tringles 15 dans chaque bourrelet 16, jusqu'aux deux extrémités latérales 17 de cette armature de carcasse 14.

L'armature de carcasse 14 est constituée d'au moins une nappe radiale contenant des fils de renforcement radiaux qui sont disposés pratiquement parallèles les uns aux autres et qui s'étendent d'un talon à l'autre de façon à former un angle compris entre 80° et 90° avec le plan circonférentiel médian M-M. Par "plan circonférentiel médian", on entend de manière connue le plan perpendiculaire à l'axe de rotation du pneumatique qui est situé à mi-distance des deux tringles 15.

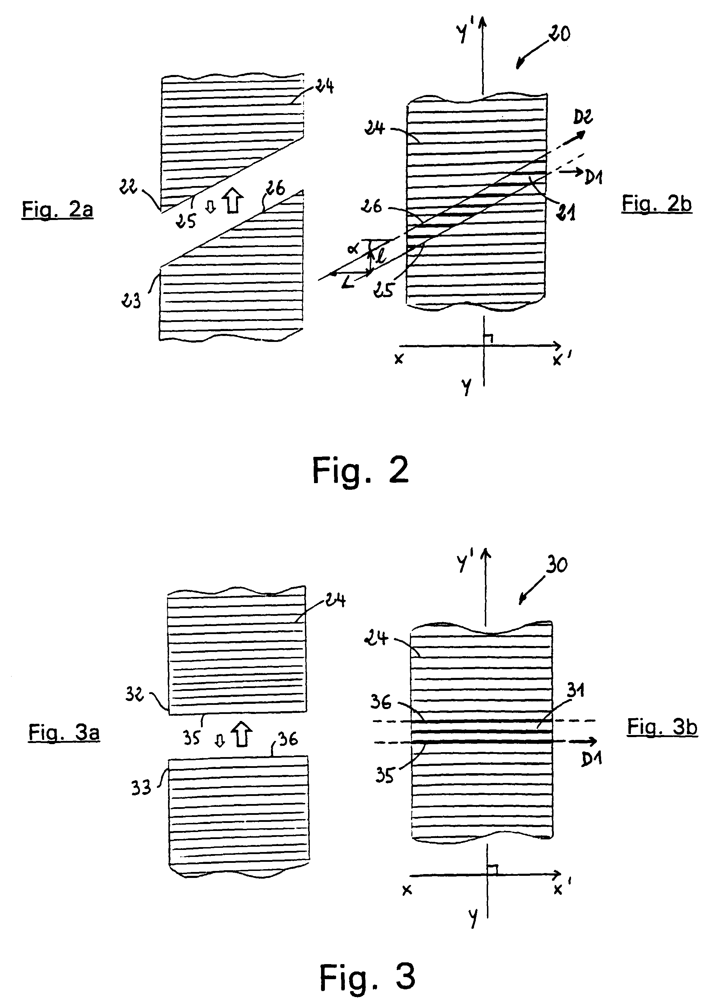

La figure 2 représente, vue de dessus, pour une enveloppe de pneumatique 10 conforme à l'invention, une portion de nappe carcasse radiale 20 comportant une soudure par recouvrement oblique 21 (Fig. 2b), ainsi que les deux extrémités 22 et 23, coupées en biais, d'un même lé de tissu (Fig. 2a), ces deux extrémités étant destinées à être superposées pour former la soudure 21. Cette portion de nappe 20 constitue une partie de l'armature de carcasse 14, située dans le flanc 11 d'une enveloppe de pneumatique 10 conforme à l'invention.

Pour faciliter la description et la compréhension de l'invention, cette portion de nappe 20 et sa soudure par recouvrement oblique 21 sont représentées de manière schématique, projetées à plat, et non sous la forme toroïdale qui est adoptée dans l'enveloppe conformée. Cette nappe 20 est renforcée par des fils radiaux 24, disposés à intervalle régulier, par exemple d'environ 1 mm, et sensiblement parallèlement les uns aux autres. A titre d'exemple, ces fils radiaux sont des retors en polyester, notamment en polyéthylène téréphtalate (PET), ces retors ayant par exemple un titre d'environ 400 à 500 tex (un poids de 400 à 500 grammes pour mille mètres de retors).

La direction *D1* de ces fils radiaux 24 est sensiblement radiale, i.e. sensiblement parallèle à la direction de l'axe strictement radial (xx'), c'est-à-dire que la direction *D1* fait un angle de 0 ± 10° avec l'axe (xx') qui est lui-même perpendiculaire à l'axe circonférentiel (yy') (axe tangent à la direction circonférentielle). L'axe (yy') est un axe circonférentiel quelconque passant par le flanc 11 du pneumatique et parallèle à l'axe circonférentiel médian (axe contenu dans le plan circonférentiel médian M-M).

Dans les cas où la direction *D1* n'est pas confondue avec la direction strictement radiale (xx'), la soudure par recouvrement du pneumatique de l'invention est de préférence oblique à la fois par rapport à la direction des fils radiaux et par rapport à la direction (xx').

Lors de la confection du pneumatique de l'invention sur un tambour, avant l'étape de conformation de l'enveloppe, la nappe 20 consiste en un élément annulaire continu dans une direction normale à *D1,* c'est-à-dire sensiblement parallèle à la direction (yy'), cet élément continu étant formé par recouvrement et assemblage des deux extrémités 22 et 23 d'un même lé de tissu. Ces deux extrémités 22 et 23 sont coupées en biais par rapport à l'axe (direction *D1)* des fils radiaux 24, et sont représentées à la figure 2a juste avant le recouvrement circonférentiel (selon la direction circonférentielle yy' indiquée par les deux flèches) de la lisière 25 par la lisière 26, pour formation de la soudure par recouvrement oblique 21 d'orientation *D2.*

De manière générale, dans la présente description, doit être entendu par "soudure par recouvrement" toute la zone de recouvrement ou chevauchement de deux extrémités ou éléments adjacents de tissu formant la nappe radiale, comme par exemple les deux extrémités 22 et 23 de la Fig. 2a, cette zone de recouvrement étant limitée circonférentiellement par ses deux lisières (25 et 26 sur la Fig. 2b).

Comme représenté clairement à la figure 2b, la soudure 21 a une orientation générale *D2* oblique par rapport à la direction *D1* des fils radiaux. Dans la zone de chevauchement, la densité de fils radiaux est doublée par rapport au reste de la nappe soudée, cette densité double étant illustrée, de manière schématique, par la présence de traits plus épais. A titre d'exemple, la densité de fils radiaux peut être de l'ordre de 100 fils par dm (décimètre) de nappe à l'extérieur de la soudure, et donc d'environ 200 fils/dm à l'intérieur de la soudure.

L'angle aigu noté α (alpha) que forme l'orientation générale *D2* de la soudure oblique avec la direction *D1* des fils radiaux est appelé ci-après "angle de soudure". Par soudure oblique, on entend ici par convention une soudure inclinée de plus de 1 degré par rapport à la direction de référence (α supérieur à 1°).

Cet angle de soudure α peut varier de plus de 1 degré à quelques dizaines de degrés, par exemple jusqu'à 20 degrés voire plus, en fonction des caractéristiques particulières du pneumatique fabriqué, et notamment des dimensions de la nappe radiale ou de celles des flancs du pneumatique. De préférence, l'angle α est choisi supérieur à 2°, plus préférentiellement compris dans un domaine allant de 5° à 20°, encore plus préférentiellement compris dans un domaine allant de 10° à 15°.

Par convention, la dimension de la soudure (d'une lisière à l'autre) dans une direction normale à *D1* (i.e. dans une direction sensiblement circonférentielle) est appelée largeur circonférentielle de soudure et notée *l*, et la dimension de la soudure dans une direction parallèle à *D1* est appelée longueur radiale de soudure et notée *L* (voir Fig. 2b).

De préférence, dans le pneumatique conforme à l'invention, la dimension *l* est inférieure à la dimension *L*, c'est-à-dire que la tangente de l'angle α est inférieure à 1 (α inférieur à 45°).

Pour comparaison avec la figure 2, la figure 3 correspond à une enveloppe classique de l'art antérieur. Cette figure 3 représente, vue de dessus et projetée à plat, une portion de nappe radiale 30 située dans le flanc de cette enveloppe classique. Cette portion de nappe 30 comporte une soudure par recouvrement 31 selon l'art antérieur, c'est-à-dire radiale (Fig. 3b). Sur la figure 3, sont également représentées les deux extrémités 32 et 33 d'un même lé de tissu servant à la confection de cette nappe 30 (Fig. 3a).

La nappe 30, lors de la confection du pneumatique sur un tambour, est formée de manière connue par recouvrement circonférentiel des deux extrémités 32 et 33 d'un même lé de tissu de forme rectangulaire. Ces deux extrémités 32 et 33 sont toujours coupées entre deux fils radiaux 24 et parallèlement à leur direction *D1,* de manière à ne pas couper ni endommager ces fils radiaux. Après superposition de la lisière 35 par la lisière 36, on obtient une soudure par recouvrement radiale, c'est-à-dire une soudure dont l'orientation générale est parallèle à la direction *D1* des fils radiaux. Dans cette soudure radiale, la densité de fils radiaux est doublée par rapport au reste de la nappe, cette densité double étant illustrée à la figure 3b par la présence de traits plus épais, comme pour la figure 2b précédente. La soudure 31 étant parallèle à la direction *D1,* la longueur radiale de soudure *L* est simplement égale, dans le cas présent, à la largeur totale de la nappe radiale, mesurée, selon *D1,* entre ses deux extrémités latérales 17.

On a donc constaté que sur le flanc du pneumatique de l'invention ayant une nappe carcasse à soudure par recouvrement oblique, la trace de la soudure est moins visible que sur le flanc d'un pneumatique classique de l'art antérieur ayant une nappe carcasse à soudure radiale. En outre, l'effet indésirable de la soudure étant délocalisé, en quelque sorte "dilué" sur une longueur circonférentielle plus importante (comparer Fig. 2b et Fig. 3b), le pneumatique de l'invention présente, en général, une uniformité améliorée par rapport au pneumatique classique.

Pour obtenir un tel résultat, encore fallait-il oser couper les fils de renforcement radiaux lors de la confection du pneumatique, ce qui va tout à fait à l'encontre des règles de l'art. En effet, selon les connaissances de l'homme du métier, il est très important de ne pas couper ou même endommager les fils radiaux, pendant la découpe "à longueur" des lés de tissu destinés à la confection des nappes radiales. Et l'homme du métier n'imaginait pas qu'une telle coupe puisse être réalisée autrement que parallèlement aux fils radiaux, et entre ces derniers.

La description de l'invention faite précédemment à la figure 2 s'applique également aux cas où les fils radiaux ne sont pas utilisés seuls pour renforcer les tissus, mais associés à d'autres fils non radiaux. Par exemple la nappe radiale 20 peut consister en un tissu tramé comportant, de manière connue, des fils de chaîne et des fils de trame, les fils de chaîne étant les fils radiaux 24 représentés à la figure 2, croisés avec des fils de trame non représentés à la figure 2, par exemple des fils de trame en polyester et/ou en coton.

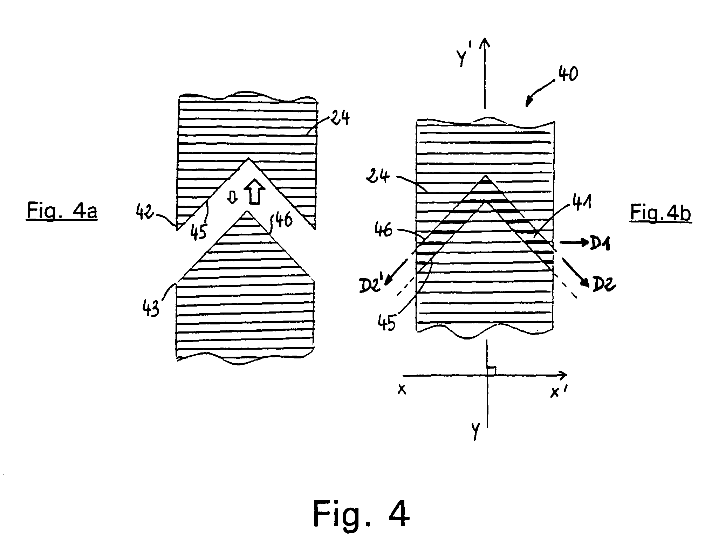

La figure 4, comparée à la figure 2, schématise un autre exemple de pneumatique conforme à l'invention. Elle représente, vue de dessus et projetée à plat, une portion de nappe carcasse radiale 40 (Fig. 4b) ayant une soudure par recouvrement oblique 41 en forme de "V" sensiblement centré sur l'axe (yy'). L'axe (yy') représenté ici est l'axe circonférentiel médian, c'est-à-dire que la pointe du "V" se trouve centrée sous la bande de roulement du pneumatique. Sur la figure 4 sont également représentées les deux extrémités 42 et 43 d'un même lé de tissu, avant leur superposition circonférentielle (Fig. 4a). Pour l'obtention de la soudure 41, ces deux extrémités 42 et 43 sont préalablement coupées en biais, en leur donnant la forme d'un "V". On obtient ainsi une soudure principale constituée de deux soudures élémentaires obliques, d'orientations distinctes *D2* et *D2',* inclinées de manière symétrique par rapport au plan circonférentiel médian M-M, et s'étendant de part et d'autre de ce dernier dans chaque flanc du pneumatique. Dans chaque soudure élémentaire, comme pour les figures précédentes, la densité de fils radiaux est doublée par rapport au reste de la nappe, cette densité double étant illustrée à la figure 4b par la présence de traits plus épais.

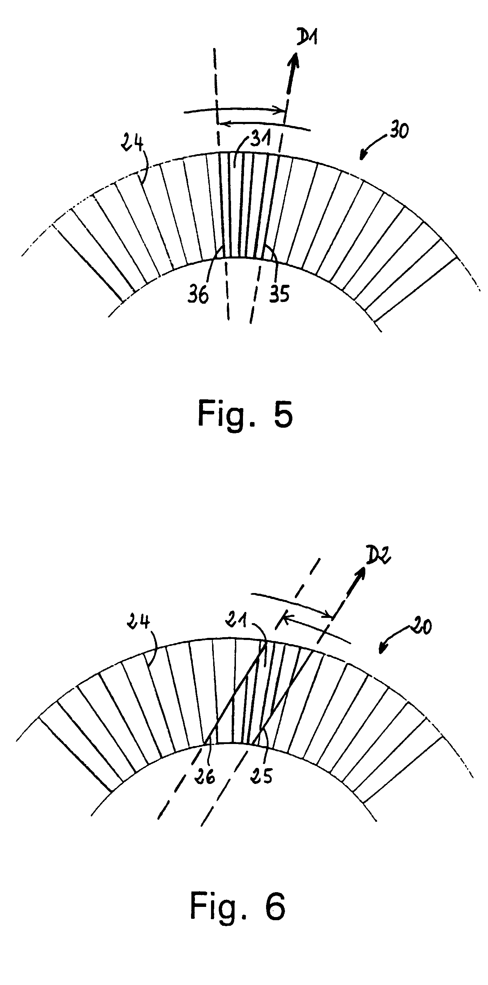

La figure 5 représente quant à elle une autre illustration graphique possible d'une partie d'enveloppe radiale correspondant à l'art antérieur. Cette figure 5 est une vue en coupe longitudinale d'une portion de nappe radiale classique 30 telle que représentée par exemple à la figure 3b, cette portion de nappe ayant adopté, sur cette figure 5, la forme toroïdale qui est la sienne une fois l'enveloppe conformée. Cette nappe 30 renforcée par des fils radiaux 24 se caractérise de manière connue par une soudure 31, limitée par deux lisières 35 et 36, dont l'orientation générale est radiale, c'est-à-dire parallèle à la direction *D1* des fils radiaux adjacents à la soudure.

Pour comparaison avec la figure 5, la figure 6 est une vue en coupe longitudinale d'une portion de la nappe carcasse radiale 20 représentée à la figure 2b, également sous la forme toroïdale adoptée par l'enveloppe conformée, dans le cas d'un pneumatique conforme à l'invention. Cette nappe 20 renforcée par les fils radiaux 24 se caractérise par une soudure par recouvrement 21, limitée par les deux lisières 25 et 26, dont l'orientation générale *D2* est oblique par rapport à la direction *D1* des fils radiaux présents dans la zone de soudure.

Bien entendu, pour toutes les figures 1 à 6 précédentes, les proportions réelles entre l'inclinaison et les dimensions de la soudure, les dimensions du pneumatique ou de sa nappe radiale, celles des fils radiaux ou des intervalles entre ces fils, et plus généralement de tout autre paramètre, n'ont pu être respectées, dans un souci de simplification et de clarté de l'exposé.

Selon l'invention, la soudure par recouvrement oblique est de faible dimension dans la direction circonférentielle (de préférence moins de 50 mm), par rapport à la dimension de la nappe radiale elle-même. La dimension *l* de la soudure peut varier par exemple de 2 mm à quelques dizaines de millimètres, par exemple jusqu'à 20 ou 30 mm, en fonction des caractéristiques particulières du pneumatique fabriqué. De préférence, la dimension *l* est supérieure à 2 mm, plus préférentiellement supérieure à 3 mm, notamment comprise entre 3 et 15 mm.

On a constaté, lors de tests de roulage sur des pneumatiques de l'invention pour véhicule de tourisme ou pour camionnette pour lesquels l'angle de soudure α était compris dans un domaine allant de 5° à 20°, qu'une dimension de soudure *I* supérieure à 5 mm, plus préférentiellement supérieure à 8 mm, pouvait être préférable, pour des raisons d'endurance, lorsque les conditions de roulage sont particulièrement sévères.

Compte tenu notamment des valeurs préférentielles précédemment indiquées pour leur dimension *l* et leur angle α, les soudures par recouvrement obliques, dans les nappes radiales des pneumatiques de l'invention, ne comportent généralement que des fils radiaux coupés, c'est-à-dire qu'elles ne comportent en principe (mais ce n'est pas obligatoire) aucun fil radial entier ; par "fil radial entier", on entend ici un fil radial s'étendant de manière continue d'une extrémité 17 à l'autre extrémité 17 de l'armature de carcasse 14.

Il est connu que dans les pneumatiques de l'art antérieur chaque fil radial 24 forme un arceau de renforcement continu s'étendant sur toute la largeur du pneumatique, enroulé dans chaque talon 16, sous chacune des deux tringles 15, jusqu'aux deux extrémités latérales 17 de l'armature de carcasse 14 (Fig. 1). Une conséquence de la présente invention est qu'en raison de l'inclinaison de la soudure oblique, cette continuité des arceaux de renforcement est interrompue au niveau de la soudure: la longueur radiale de soudure *L* sera donc préférentiellement choisie de manière à ce que la résistance de la nappe au niveau de la soudure, mesurée selon *D1* après cuisson du pneumatique, soit au moins égale à la résistance de la nappe à l'extérieur de la soudure. De préférence, la longueur radiale *L* de la soudure sera ainsi choisie supérieure à 30 mm, plus préférentiellement supérieure à 40 mm.

Pour les autres paramètres de construction du pneumatique de l'invention, ne concernant pas directement la forme et les dimensions de la soudure, on pourra s'inspirer de règles connues. En particulier, la densité des fils radiaux est généralement comprise entre quelques dizaines et quelques centaines de fils par dm, par exemple entre 50 et 250 fils/dm, notamment entre 80 et 145 fils/dm, ce qui correspond à un intervalle entre les fils radiaux compris entre quelques dixièmes de mm et quelques mm, par exemple entre 0,4 et 2,0 mm, notamment entre 0,7 et 1,25 mm.

Les valeurs préférentielles indiquées précédemment (angles, dimensions de la soudure, densités de fils) sont toutes des valeurs mesurées dans un plan, lorsque la nappe radiale et sa soudure par recouvrement oblique sont projetées à plat.

En conséquence, l'invention concerne tout pneumatique radial comportant, dans au moins un flanc, une soudure par recouvrement oblique, c'est-à-dire une soudure par recouvrement dont l'orientation ou direction générale *D2* est oblique par rapport à la direction *D1* des fils radiaux.

La définition ci-dessus s'applique à toute soudure traversant le flanc, quelles que soient la forme particulière de cette soudure ou celle de ses lisières, et cette définition s'étend à tout segment élémentaire de soudure constituant une partie d'une soudure principale.

L'invention pourrait être réalisée en effet avec une soudure principale constituée, dans le même flanc, de plusieurs portions ou segments élémentaires d'orientations différentes, obliques ou non obliques. Dans un tel cas, de préférence, au moins une longueur substantielle de la soudure principale présentera, à la traversée du flanc, une orientation générale oblique par rapport à la direction *D1.*

De préférence, la soudure par recouvrement oblique aura une orientation oblique dans tout le flanc du pneumatique, et plus préférentiellement une orientation oblique continue (sans discontinuités d'orientation). Avantageusement, la soudure par recouvrement oblique pourra être une soudure rectiligne, c'est-à-dire que la direction générale *D2* de la soudure, lorsqu'elle est projetée à plat, formera une ligne droite continue dans toute la partie flanc du pneumatique. Mais la soudure par recouvrement oblique, ainsi projetée, pourrait adopter également une trajectoire non rectiligne, par exemple une ligne courbe, comme un arc de cercle par exemple.

Les deux lisières qui délimitent la soudure dans la direction circonférentielle pourront être parallèles, ou non parallèles entre elles. De préférence, ces deux lisières seront des lisières géométriquement superposables. On entend par là des lisières parallèles et identiques, ayant la même forme géométrique et les mêmes contours. Ainsi, l'opération de découpe des lés de tissus sur un tambour, lors de la confection du pneumatique, sera la même pour les deux lisières, et pourra donc être assurée par le même outil à une cadence élevée.

Il n'est pas nécessaire, pour que l'invention soit réalisée, que les deux lisières de la soudure par recouvrement oblique, à la traversée du flanc du pneumatique, soient localement et de manière constante parallèles à l'orientation ou direction générale *D2* de cette soudure. Sans que l'esprit de l'invention soit modifié, les deux lisières, ou l'une d'entre elles seulement, pourraient avoir par exemple une forme plus ou moins accidentée telle qu'une forme ondulée, crénelée, en zig-zag, ou encore une forme en dents de scie.

De préférence, les deux lisières seront parallèles à la soudure elle-même, c'est-à-dire à l'axe *D2* qui en détermine l'orientation générale oblique, comme illustré à titre d'exemple aux figures 2b et 4b.

Selon l'invention, dans le cas habituel d'un pneumatique comportant deux flancs, la soudure par recouvrement située dans le second flanc pourra avoir la même orientation que la soudure par recouvrement oblique du premier flanc, ou une orientation différente. La soudure du second flanc (celui non visible après montage du pneumatique sur véhicule) pourrait être par exemple simplement radiale. De préférence, la soudure du second flanc aura elle-même une orientation oblique.

De préférence, dans le cas d'un pneu conforme à l'invention comportant deux flancs et une soudure par recouvrement oblique dans chaque flanc, les deux soudures obliques auront une même inclinaison, c'est-à-dire qu'elles formeront, soit un angle de même valeur et de même signe, soit un angle de même valeur et de signe opposé, par rapport à la direction *D1* des fils radiaux. Chaque soudure oblique aura de préférence une orientation *D2* continue sur au moins chaque demi-largeur de nappe, c'est-à-dire d'une extrémité latérale de l'armature de nappe carcasse 17 jusqu'au plan circonférentiel médian M-M ; ainsi, l'opération de découpe des lés de tissu sera facilitée et pourra être assurée par des couteaux de forme simple. Avantageusement, une soudure par recouvrement oblique unique, d'orientation *D2* continue, notamment rectiligne, traversera entièrement le pneumatique, d'une extrémité latérale 17 de la nappe radiale jusqu'à son autre extrémité latérale 17, en passant d'un flanc 11 à l'autre flanc 11 (Fig. 1).

Selon l'invention, la soudure par recouvrement de la nappe radiale est oblique dans au moins un flanc du pneumatique, l'orientation de la soudure pouvant donc être oblique ou non dans le reste du pneumatique. De préférence, l'orientation sera choisie oblique dans au moins chaque flanc du pneumatique, et plus préférentiellement de même inclinaison dans chacun des flancs.

### Exemples comparatifs:

On réalise quatre lots de pneumatiques pour véhicule de tourisme, de dimension 185/80-14, un premier lot témoin correspondant à l'art antérieur (lot T), les trois autres à l'invention (lots A, B, C), chaque lot comportant 6 pneumatiques différents. Comme représenté sur la figure 1, les pneus de chaque lot comportent deux flancs 11 réunis par une bande de roulement 12, une armature de sommet 13, une armature de carcasse 14 ancrée à deux tringles 15 dans chaque bourrelet 16 jusqu'aux deux extrémités latérales 17 de cette armature 14.

L'armature de sommet 13 comporte, de manière classique, deux nappes superposées renforcées par des câbles métalliques sensiblement parallèles et inclinés d'environ 22 degrés par rapport au plan circonférentiel médian, ces nappes étant croisées par rapport à ce même plan.

L'armature de carcasse 14 est constituée d'une seule nappe radiale consistant en un tissu tramé dont les fils de trame sont des fils élastiques en polyester/coton et dont les fils de chaîne radiaux sont en PET (PET dit "HMLS" à haut module et faible contraction). Ces fils radiaux sont des retors connus ("plied yarns" ou "textile cords") de formule 110x2x2 (tex) 350Z/350S, c'est-à-dire que chaque retors est formé à partir de quatre filés (fibres multifilamentaires) dont le titre individuel est égal à 110 tex avant torsion, qui sont tordus par paquet de deux à 350 tours par mètre dans une direction (direction Z) au cours d'une première étape, puis tordus les quatre ensemble (deux paquets de deux) en sens inverse (direction S) à 350 tours par mètre au cours d'une seconde étape. La densité de fils radiaux, en dehors de la soudure, est de 98 fils par dm de nappe radiale, la distance moyenne entre deux fils radiaux adjacents, d'axe en axe, étant donc de 1,02 millimètres.

Cette nappe radiale comporte une soudure par recouvrement dont la dimension *l* est de 8,2 mm et qui contient environ 8 fils radiaux dans chaque bord de recouvrement. La largeur totale de la nappe radiale, mesurée selon *D1* entre ses deux extrémités latérales 17, est d'environ 580 mm.

Les caractéristiques qui suivent sont également communes à tous les pneus étudiés (lots A, B, C et T): la direction *D1* des fils radiaux est confondue avec la direction strictement radiale xx'; la soudure par recouvrement a une orientation générale *D2* continue et rectiligne sur toute la largeur de la nappe radiale ; la soudure est limitée par deux lisières simples, parallèles et elles-mêmes rectilignes.

La présence d'une soudure par recouvrement oblique (angle de soudure α supérieur à 1°) est la seule caractéristique qui distingue les pneus de l'invention (lot A: α = 5° ; lot B: α = 10° ; lot C: α = 15°) de ceux du lot témoin (soudure radiale: α = 0°) ; sur les pneus de l'invention, la longueur radiale *L* de la soudure est toujours supérieure à 30 mm.

Chaque enveloppe de pneumatique est montée sur une jante et gonflée à 3,5 bars, puis on analyse la déformation en creux du flanc, due à la soudure par recouvrement, de la façon suivante:
- d'une part en mesurant de manière connue, à l'aide d'un palpeur mécanique monté sur une machine de contrôle automatique, la profondeur dudit creux en deux endroits du flanc: à mi-flanc et au niveau de l'épaule (zone du flanc proche de la bande de roulement);
- d'autre part en soumettant l'enveloppe à l'examen visuel et à l'appréciation qualitative de 5 observateurs différents qui, pour des conditions identiques d'examen, lui attribuent chacun une note comme suit (après étalonnage sur enveloppes témoins):
   1 : excellent aspect du flanc (pas de trace de la soudure visible à l'oeil nu);
   2 : bon aspect du flanc (trace faiblement visible à l'oeil nu);
   3 : mauvais aspect du flanc (trace fortement visible à l'oeil nu).

Après évaluation de l'ensemble des pneumatiques, on constate d'une part que, quel que soit le lot analysé, les profondeurs moyennes des creux mesurées à mi-flanc sont sensiblement égales, soit environ 0,31 mm (moyennes calculées sur les 6 enveloppes de chaque lot).

D'autre part, au niveau de l'épaule - zone où la déformation en creux est la plus prononcée - la profondeur moyenne des creux est réduite de 15 % sur le lot A, et de 30 à 35 % sur les lots B et C, par rapport au lot témoin (profondeur moyenne proche de 1 mm sur ce lot T).

Enfin et surtout, on constate de manière inattendue que, même pour des enveloppes dont les déformations en creux (épaule ou mi-flanc) sont globalement proches en valeur absolue, la trace laissée par la soudure est moins visible sur les pneus de l'invention (lots A, B et C) que sur les pneus témoins (lot T), et ceci quel que soit l'observateur ; les meilleurs résultats sont obtenus pour les angles de soudure α égaux à 10° et 15° (note moyenne égale à 2, dans les deux cas, comparée à une note moyenne de 2,8 sur les pneus témoins).

On a constaté sur d'autres enveloppes de pneumatiques de même dimension (185/80-14) que cette amélioration de l'aspect extérieur des flancs pouvait déjà être observée pour des angles de soudure aussi faibles que 2° à 2,5°.

D'autre part, on a soumis des pneus des lots A, B et C à des tests de roulage de longue durée sur machines, pour apprécier leur endurance ; après plusieurs dizaines de milliers de kilomètres, on a constaté que cette endurance était équivalente à celle de pneus témoins du lot T.

En conséquence, les pneumatiques de l'invention, comparés aux pneumatiques de l'art antérieur, sont améliorés en ce qui concerne l'esthétique de leur flanc grâce à la présence de soudures par recouvrement obliques dans les nappes radiales formant leur armature de carcasse, ceci sans préjudice sur leurs propriétés d'endurance.

Les avantages de l'invention sont nombreux.

Les caractéristiques des fils radiaux, leur nature, leur agencement peuvent être les mêmes à l'intérieur comme à l'extérieur de la soudure, notamment à chacune de ses deux lisières ; ainsi, aucune étape supplémentaire de fabrication n'est nécessaire, que ce soit avant, pendant, ou après l'étape de confection.

L'invention ne nécessite aucune intervention manuelle pendant les étapes de fabrication, ni l'emploi de machines plus précises que les machines de fabrication utilisées habituellement pour la fabrication des pneus radiaux possédant des soudures radiales classiques. Les pneus de l'invention peuvent être notamment réalisés sur des machines automatiques fonctionnant à cadence élevée, donc sans perte de productivité.

Essentiellement, une seule modification, mineure et sans surcoût, est à apporter à l'outil de fabrication: une opération d'inclinaison des couteaux utilisés pour la découpe des tissus, ces couteaux pouvant conserver des lames de forme tout à fait simple, comme des lames rectilignes par exemple.

Bien entendu, l'invention n'est pas limitée à ce qui a été décrit précédemment.

L'invention n'est pas limitée notamment à un pneumatique radial pour véhicule de tourisme ou camionnette, ni à un pneumatique présentant une seule nappe carcasse ou une seule soudure par recouvrement oblique dans au moins un flanc, et elle s'applique aux cas où l'on utilise plus d'une nappe pour constituer l'armature de carcasse et/ou plus d'une soudure par recouvrement oblique par nappe carcasse.

Il est connu en particulier que les lés de tissu utilisés pour la confection de nappes carcasse radiales sont découpés dans des bandes de tissu plus longues comportant elles-mêmes des soudures dites "de préparation" (sur les tissus), par opposition aux soudures dites "de confection" (sur les nappes du pneumatique). Pour la fabrication des pneumatiques radiaux de l'art antérieur, ces soudures de préparation sont radiales (orientation parallèle à celle des fils radiaux), comme les soudures de confection. Par contre, pour la fabrication des pneus de l'invention, on pourra choisir avantageusement des soudures de préparation ayant elles-mêmes une orientation oblique par rapport à la direction des fils radiaux, c'est-à-dire que toutes les soudures par recouvrement de la nappe radiale seront obliques, que ces soudures soient des soudures de préparation ou des soudures de confection, et notamment des soudures de préparation ayant une orientation parallèle aux soudures de confection, afin que ces dernières ne puissent couper les soudures de préparation.

L'invention n'est pas limitée non plus à l'utilisation de nappes carcasse renforcées avec des fils présentant de faibles valeurs de modules en extension, comme des fils en polyester par exemple, et notamment des fils en PET. Les fils radiaux pourraient être d'autres fils textiles, comme par exemple des fils textiles à base de polyamide (aromatique ou non aromatique), à base de cellulose, ou d'autres fils non textiles, par exemple des fibres de verre ou des fils métalliques, ou encore des fils hybrides réalisés avec des matières différentes. Comme déjà mentionné, ces fils radiaux pourront être utilisés seuls pour renforcer les nappes radiales des pneumatiques de l'invention, ou encore associés à d'autres fils, notamment comme fils de chaîne dans des tissus tramés.

Par ailleurs, le terme "fil" doit être pris dans un sens très général, c'est-à-dire que chacun des fils radiaux peut être constitué par exemple d'un seul fil unitaire, de forme cylindrique ou non, soit d'un assemblage de plusieurs fils unitaires, formant par exemple un câble, un retors, une fibre multifilamentaire tordue sur elle-même, chaque fil unitaire pouvant être notamment constitué soit d'un filament unique, par exemple un monofilament de diamètre élevé, soit de plusieurs filaments. Cette définition est valable quelles que soient la section droite du fil unitaire, la matière, la technique d'assemblage lorsqu'il s'agit de fils assemblés.

## Revendications

1. Pneumatique radial ayant au moins un flanc et une armature de carcasse constituée d'au moins une nappe dite radiale renforcée par des fils parallèles de direction sensiblement radiale, dits fils radiaux, qui comporte au moins une soudure par recouvrement formée par la superposition de deux extrémités ou éléments adjacents de ladite nappe, caractérisé en ce que, dans ledit flanc, l'orientation générale de ladite soudure par recouvrement est oblique par rapport à la direction des fils radiaux.

2. Pneumatique selon la revendication 1, caractérisé en ce que l'orientation générale de la soudure par recouvrement est oblique par rapport à la direction strictement radiale.

3. Pneumatique selon l'une quelconque des revendications 1 ou 2, caractérisé en ce que la soudure par recouvrement oblique est limitée, dans la direction circonférentielle, par deux lisières géométriquement superposables.

4. Pneumatique selon l'une quelconque des revendications 1 à 3, caractérisé en ce que l'angle de soudure (noté α) formé par la direction des fils radiaux et la direction de la soudure par recouvrement oblique est supérieur à 2 degrés.

5. Pneumatique selon l'une quelconque des revendications 1 à 4, caractérisé en ce que la dimension (notée *l*) de la soudure par recouvrement oblique mesurée perpendiculairement à la direction des fils radiaux, est inférieure à sa dimension (notée *L)* mesurée parallèlement à la direction de ces fils radiaux.

6. Pneumatique selon l'une quelconque des revendications 1 à 5, caractérisé en ce que la dimension *l* est supérieure à 2 millimètres.

7. Pneumatique selon la revendication 6, pour véhicule de tourisme ou camionnette, caractérisé en ce que la dimension *l* est supérieure à 5 millimètres et en ce que l'angle α est compris dans un domaine allant de 5° à 20°.

8. Pneumatique selon la revendication 7, caractérisé en ce que la dimension *l* est supérieure à 8 millimètres et en ce que l'angle α est compris dans un domaine allant de 10° à 15°.

9. Pneumatique selon l'une quelconque des revendications 1 à 8, caractérisé en ce que la dimension *L* est supérieure à 30 millimètres.

10. Pneumatique selon l'une quelconque des revendications 1 à 9, caractérisé en ce que l'armature de carcasse comporte une seule nappe radiale.

11. Pneumatique selon l'une quelconque des revendications 1 à 10, caractérisé en ce que les fils radiaux constituent les fils de chaîne d'un tissu tramé.

12. Pneumatique selon l'une quelconque des revendications 1 à 11, caractérisé en ce que les fils radiaux sont à base de polyester.

## Patentansprüche

1. Radialreifen mit mindestens einer Flanke und einer Karkassenarmatur, die aus mindestens einer sogenannten Radiallage gebildet ist, die mit parallelen, in im wesentlichen radialer Richtung verlaufenden Fäden, sogenannten Radialfäden, verstärkt ist und mindestens eine Überdeckungs-Schweißstelle aufweist, die durch die Überlagerung der beiden Enden oder benachbarter Elemente der genannten Lage gebildet ist, dadurch gekennzeichnet, daß in der genannten Flanke die allgemeine Ausrichtung der genannten Überdeckungs-Schweißstelle in Bezug auf die Richtung der Radialfäden schräg verläuft.

2. Reifen nach Anspruch 1, dadurch gekennzeichnet, daß die allgemeine Ausrichtung der Überdeckungs-Schweißstelle in Bezug auf die streng radiale Richtung schräg verläuft.

3. Reifen nach irgendeinem der Ansprüche 1 oder 2, dadurch gekennzeichnet, daß die schräge Überdeckungs-Schweißstelle in Umfangsrichtung durch zwei geometrisch überlagerbare Kanten begrenzt ist.

4. Reifen nach irgendeinem der Ansprüche 1 bis 3, dadurch gekennzeichnet, daß der Winkel der Schweißstelle (mit α bezeichnet), der durch die Richtung der Radialfäden und die Richtung der schrägen Überdeckungs-Schweißstelle gebildet ist, größer ist als 2 Grad.

5. Reifen nach irgendeinem der Ansprüche 1 bis 4, dadurch gekennzeichnet, daß die Abmessung (mit *l* bezeichnet) der schrägen Überdeckungs-Schweißstelle. senkrecht zur Richtung der Radialfäden gemessen, kleiner ist als ihre Abmessung (mit L bezeichnet), parallel zur Richtung dieser Radialfäden gemessen.

6. Reifen nach irgendeinem der Ansprüche 1 bis 5, dadurch gekennzeichnet, daß die Abmessung *l* größer ist als 2 Millimeter.

7. Reifen nach Anspruch 6 für ein Tourenfahrzeug oder einen Kleinlastwagen, dadurch gekennzeichnet, daß die Abmessung *l* größer ist als 5 Millimeter, und daß der Winkel α in einem Bereich liegt, der sich von 5° bis 20° erstreckt.

8. Reifen nach Anspruch 7. dadurch gekennzeichnet, daß die Abmessung*l* größer ist als 8 Millimeter, und daß der Winkel α in einem Bereich liegt, der sich von 10° bis 15° erstreckt.

9. Reifen nach irgendeinem der Ansprüche 1 bis 8, dadurch gekennzeichnet, daß die Abmessung L größer ist als 30 Millimeter.

10. Reifen nach irgendeinem der Ansprüche 1 bis 9, dadurch gekennzeichnet, daß die Karkassenarmatur eine einzige Radiallage aufweist.

11. Reifen nach irgendeinem der Ansprüche 1 bis 10, dadurch gekennzeichnet, daß die Radialfäden die Kettfäden eines gewebten Stoffes bilden.

12. Reifen nach irgendeinem der Ansprüche 1 bis 11, dadurch gekennzeichnet, daß die Radialfäden auf Polyesterbasis beruhen.

## Claims

1. Radial tyre having at least one sidewall and a carcass reinforcement consisting of at least one so-called radial ply reinforced by parallel threads of substantially radial direction, called radial threads, which comprises at least one lap weld formed by superposing two ends or adjacent elements of said ply, characterised in that, in said sidewall, the general orientation of said lap weld is oblique with respect to the direction of the radial threads.

2. Tyre according to claim 1, characterised in that the general orientation of the lap weld is oblique with respect to the strictly radial direction.

3. Tyre according to any one of claims 1 or 2, characterised in that the oblique lap weld is bounded, in the circumferential direction, by two geometrically superposable selvages.

4. Tyre according to any one of claims 1 to 3, characterised in that the weld angle (symbol α) formed by the direction of the radial threads and the direction of the oblique lap weld is greater than 2 degrees.

5. Tyre according to any one of claims 1 to 4, characterised in that the dimension (symbol I) of the oblique lap weld measured perpendicular to the direction of the radial threads is less than its dimension (symbol L) measured parallel to the direction of said radial threads.

6. Tyre according to any one of claims 1 to 5, characterised in that the dimension I is greater than 2 millimetres.

7. Tyre according to claim 6, for a passenger vehicle or van, characterised in that the dimension I is greater than 5 millimetres and in that the angle α is in a range from 5° to 20°.

8. Tyre according to claim 7, characterised in that the dimension *l* is greater than 8 millimetres and in that the angle α is in a range from 10° to 15°.

9. Tyre according to any one of claims 1 to 8, characterised in that the dimension *L* is greater than 30 millimetres.

10. Tyre according to any one of claims 1 to 9, characterised in that the carcass reinforcement comprises a single radial ply.

11. Tyre according to any one of claims 1 to 10, characterised in that the radial threads are the warp threads of a woven fabric.

12. Tyre according to any one of claims 1 to 11, characterised in that the radial threads are based on polyester.
